# EUROPÄISCHE PATENTSCHRIFT

(11) **EP 3 937 352 B1**
(45) Veröffentlichungstag und Bekanntmachung des Hinweises auf die Patenterteilung: **31.08.2022**
(21) Anmeldenummer: 20184640.9
(22) Anmeldetag: 08.07.2020
(51) Int. Cl.: H02K 5/00, H02K 15/12, F16B 21/07, F16B 3/00, H02K 15/14, H02K 15/00

(54) **VERBINDUNGSVORRICHTUNG ZUM VERBINDEN EINER MOTOREINHEIT MIT EINEM GEHÄUSE UND VERFAHREN ZUM VERBINDEN DER MOTOREINHEIT MIT DEM GEHÄUSE MITTELS DER VERBINDUNGSVORRICHTUNG**
CONNECTING DEVICE FOR CONNECTING A MOTOR UNIT TO A HOUSING AND METHOD FOR CONNECTING THE MOTOR UNIT TO THE HOUSING BY MEANS OF THE CONNECTING DEVICE
DISPOSITIF DE RACCORDEMENT PERMETTANT DE RACCORDER UNE UNITÉ MOTEUR À UN BOITIER ET PROCÉDÉ DE RACCORDEMENT DE L'UNITÉ MOTEUR AU BOITIER À L'AIDE DU DISPOSITIF DE RACCORDEMENT

(43) Veröffentlichungstag der Anmeldung: 12.01.2022
(73) Patentinhaber: SICK AG, 79183 Waldkirch (DE)
(72) Erfinder: Schmalfuß, Moritz, 79199 Kirchzarten (DE); Neuhaus, Iris, 25451 Quickborn (DE); Biener, Marc, 20535 Hamburg (DE)

(56) Entgegenhaltungen:
- DE-A1-102016 111 862
- DE-U1- 20 217 301
- DE-U1-202017 006 928
- JP-A- S6 189 465
- US-A- 3 798 869

## Beschreibung

Die Erfindung betrifft eine Verbindungsvorrichtung zum Verbinden einer Motoreinheit mit einem Gehäuse gemäß dem Oberbegriff des Anspruchs 1 und ein Verfahren zum Verbinden einer Motoreinheit mit einem Gehäuse mittels einer Verbindungsvorrichtung gemäß dem Oberbegriff des Anspruchs 9.

Die in der heutigen Zeit verwendeten Maschinen bestehen in der Regel aus vielen verschiedenen Einheiten, die zu der Maschine zusammengefügt werden. Die Einheiten umfassen beispielsweise Motoreinheiten, Kommunikationseinheiten, Erfassungseinheiten usw., wobei diese Einheiten in einem Gehäuse montiert werden. Ein Scanner stellt zum Beispiel solch eine Maschine dar, der eine Sensorik, eine Motoreinheit und ein Gehäuse umfasst, in dem die Sensorik und die Motoreinheit untergebracht sind.

Die Einheiten eines zusammengebauten Scanners bzw. einer zusammengebauten Maschine sollen hierbei wieder voneinander lösbar sein, damit es einfacher ist, an die Einheiten aufgrund von Wartungsarbeiten oder eines Austausches zu gelangen. Hierzu ist es bei den vorhandenen Maschinen bekannt, dass die Einheiten zueinander verschraubt, verklebt oder verspannt werden.

Bei einem Verschrauben oder Verspannen der Einheiten zueinander sind Herstellungstoleranzen der einzelnen Einheiten schwierig auszugleichen, so dass es erforderlich ist, die Einheiten mit einer höheren Genauigkeit herzustellen. Die präzise Herstellung der Einheiten mit sehr geringen Abweichungen, das heißt mit einem sehr kleinen Toleranzbereich, bewirkt wiederum eine Verteuerung der gesamten Maschine.

Werden die Einheiten zueinander verklebt, sind die Einheiten nicht mehr voneinander lösbar, so dass eine Wartung bzw. ein Austausch einzelner Einheiten schwierig oder teilweise sogar unmöglich durchzuführen sind. Zusätzlich besteht beim Verkleben die Gefahr, dass bewegliche Teile, wie beispielsweise ein Lager oder eine Welle, ungewollt verklebt werden, so dass sich daraus eine Fehlfunktion ergibt.

Aus DE 20 2017 006 928 U1 ist eine Verbindungsvorrichtung gemäß den Merkmalen des Anspruchs 1 bekannt. Hierbei besteht die Verbindungsvorrichtung aus einem Stabilisierungsteil, das zwischen einer Gebläsemotoreinheit und einem Gehäuse klemmend angeordnet ist, so dass die Gebläsemotoreinheit durch das Stabilisierungsteil gegen ein Verdrehen innerhalb des Gehäuses gesichert ist.

DE 10 2016 111 862 A1 offenbart eine Wellenstützvorrichtung zum Stützen einer Ausgangswelle eines Motors, wobei die Wellenstützvorrichtung einen Anbringungsteil umfasst, der an einem Ende ein die Ausgangswelle stützendes Lager fixiert und an dem anderen Ende auf einem Motorgehäuse des Motors montiert ist.

JP S61 89465 A offenbart eine Anordnung eines Antriebsmotors an einem Kühlschrank, wobei der Antriebsmotor auf der einen Seite zum Kühlkreislauf des Kühlschranks und auf der anderen Seite zum Gehäuse des Kühlschranks jeweils durch Schwingungsdämpfer gelagert ist.

Es ist eine Aufgabe der Erfindung, eine Verbindungsvorrichtung zum Verbinden einer Motoreinheit mit einem Gehäuse zur Verfügung zu stellen, mit der eine einfache und genaue Montage der Motoreinheit zu dem Gehäuse möglich ist.

Die Aufgabe wird erfindungsgemäß gelöst durch eine Verbindungsvorrichtung zum Verbinden einer Motoreinheit mit einem Gehäuse mit den Merkmalen des Anspruchs 1. Hierbei umfasst die Verbindungsvorrichtung zum Verbinden einer Motoreinheit mit einem Gehäuse, wobei die Verbindungsvorrichtung dazu vorgesehen ist, zwischen der Motoreinheit und dem Gehäuse angeordnet zu sein, eine Innenwand, die an der Motoreinheit anliegt, eine Außenwand, die an dem Gehäuse anliegt, wobei die Verbindungsvorrichtung gekennzeichnet ist durch mindestens eine Kammer, die zusammen mit der Innenwand und der Außenwand einen Profilkörper bildet, und ein selbstaushärtendes Füllmaterial, das in flüssigem Zustand in die Kammer des Profilkörpers füllbar ist, wobei das Füllmaterial in dem in Verbindungsposition zwischen der Motoreinheit und dem Gehäuse montierten Profilkörper ausgehärtet ist, so dass der Profilkörper versteift ist und eine Klemmkraft erzeugbar ist, um die Motoreinheit mit dem Gehäuse spielfrei zu verbinden.

Das heißt mit anderen Worten, die Verbindungsvorrichtung dient quasi als Zwischenelement zwischen der Motoreinheit und dem Gehäuse. Vorteilhafterweise sind die Motoreinheit und/oder das Gehäuse von dem Profilkörper bei ausgehärtetem Füllmaterial voneinander lösbar, so dass es bei Bedarf möglich ist, die Motoreinheit werkzeuglos wieder von dem Gehäuse zu trennen. Hierbei bedarf es nur die Klemmkraft der Verbindungsvorrichtung auf die Motoreinheit und das Gehäuse zu überwinden.

Gemäß einem bevorzugten Ausführungsbeispiel ist der Profilkörper an einer Lagereinheit der Motoreinheit und in einer Aussparung des Gehäuses angeordnet. Vorteilhafterweise weist der Profilkörper ein ring- oder rechteckförmiges U-, H-, Waben- oder Lamellenprofil auf. Hierdurch lässt sich die Verbindungsvorrichtung an unterschiedlichen Maschinenbauformen einfach anpassen. Vorzugsweise besteht der Profilkörper aus elastischem Material, insbesondere Kunststoff, wodurch der Profilkörper ohne das Füllmaterial flexibel ist. Hieraus ergibt sich der Vorteil, dass die Flexibilität des Profilkörpers eine spielfreie Anordnung der Verbindungsvorrichtung zwischen der Motoreinheit und dem Gehäuse ermöglicht, so dass nach dem Aushärten des Füllmaterials und damit mit dem Versteifen des Profilkörpers die Motoreinheit und das Gehäuse toleranzkompensiert bzw. passgenau zueinander montiert sind. Zur zusätzlichen Stabilisierung der Motoreinheit in dem Gehäuse kann die Motoreinheit an unterschiedlichen Stellen, wie beispielsweise an den Stirnseiten der Motoreinheit, mit dem Gehäuse verschraubt sein, so dass die Fertigungstoleranzen der Motoreinheit und dem Gehäuse durch die Verbindungsvorrichtung kompensiert sind und die Stabilität zwischen der Motoreinheit und dem Gehäuse durch die zusätzliche Verschraubung hergestellt ist.

Weiterhin weisen gemäß einem bevorzugten Ausführungsbeispiel die Innen- und/oder Außenwand alternierende Wandabschnitte mit unterschiedlichen Wandstärken auf. Vorzugsweise sind dünnwandige und dickwandige Wandabschnitte abwechselnd entlang eines Umfangs der Innen- und/oder Außenwand angeordnet. Hierdurch kann die Verbindungsvorrichtung ohne Spezialwerkzeug bzw. Zugangsplatz für Werkzeuge und mit wenig Kraftaufwand in das Gehäuse platziert und an die Motoreinheit angeordnet werden.

Gemäß einem weiteren bevorzugten Ausführungsbeispiel ist das Füllmaterial ein Klebstoff oder ein Schaumstoff. Hierdurch ist ein Befüllen der Kammer des Profilkörpers einfach durchzuführen.

Ferner ist es eine Aufgabe der Erfindung, ein Verfahren zum Verbinden einer Motoreinheit mit einem Gehäuse mittels einer Verbindungsvorrichtung gemäß einem der Ansprüche 1 bis 8 zur Verfügung zu stellen, welches eine einfache und genaue Montage der Motoreinheit zu dem Gehäuse ermöglicht.

Die Aufgabe wird erfindungsgemäß durch ein Verfahren mit den Merkmalen des Anspruchs 9 gelöst. Das erfindungsgemäße Verfahren zum Verbinden einer Motoreinheit mit einem Gehäuse mittels einer Verbindungsvorrichtung nach einem der Ansprüche 1 bis 8, ist gekennzeichnet durch die Schritte:
a) Spielfreies Anlegen der Verbindungsvorrichtung an das Gehäuse,
b) Befüllen zumindest einer Kammer der Verbindungsvorrichtung mit einem flüssigen Füllmaterial,
c) Spielfreies Anlegen der Motoreinheit an die Verbindungsvorrichtung, und
d) Aushärten des Füllmaterials, so dass die Verbindungsvorrichtung versteift, eine Klemmkraft erzeugt wird, und dadurch die Motoreinheit mit dem Gehäuse spielfrei zueinander festlegt.

Durch die Flexibilität der Verbindungsvorrichtung sitzt die Verbindungsvorrichtung spielfrei zwischen der Motoreinheit und dem Gehäuse. Das heißt, die Verbindungsvorrichtung ist in der Lage, sich an die Herstellungstoleranzen der Motoreinheit und des Gehäuses anzupassen. Nach dem Aushärten des Füllmaterials und damit durch das Versteifen der Verbindungsvorrichtung in der spielfreien Lage, können die Herstellungstoleranzen der Motoreinheit und des Gehäuses kompensiert werden, so dass die Motoreinheit präzise zu dem Gehäuse montiert ist.

Gemäß einem bevorzugten Ausführungsbeispiel werden die Schritte a) bis c) in einer umgekehrten Reihenfolge ausgeführt, so dass der Montageprozess sehr flexibel ausgestaltet sein kann.

Vorteilhafterweise wird das Aushärten des Füllmaterials mittels Wärmezufuhr kontrolliert durchgeführt, wodurch beispielsweise keine unerwünschte Montagespannung zwischen der Motoreinheit, der Verbindungsvorrichtung und dem Gehäuse entsteht.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer montierten Maschine mit einer erfindungsgemäßen Verbindungsvorrichtung,
- Fig. 2a: eine schematische Draufsicht eines Ausführungsbeispiels eines Profilkörpers,
- Fig. 2b: eine schematische perspektivische Darstellung des Profilkörpers der Figur 2a, und
- Fig. 2c: eine schematische Draufsicht eines weiteren Ausführungsbeispiels der Verbindungsvorrichtung.

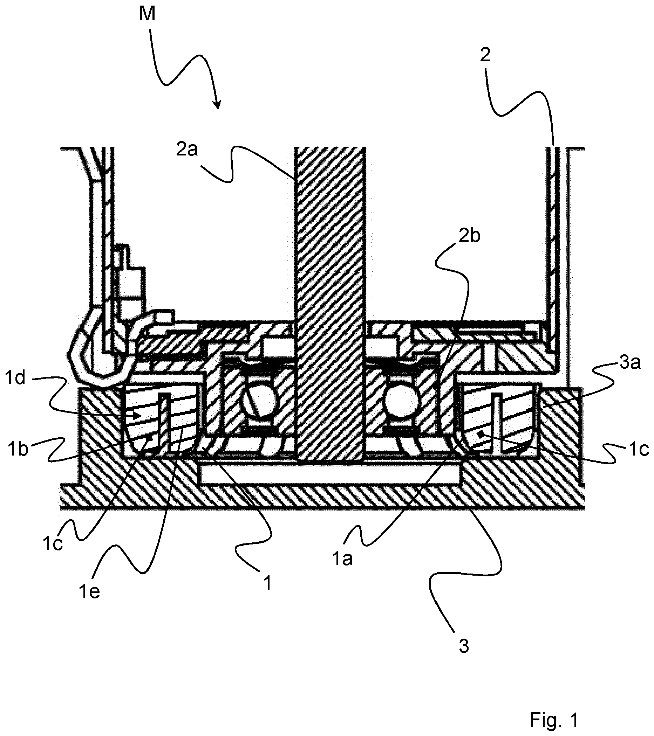

Die Figur 1 zeigt schematisch eine Schnittdarstellung einer montierten Maschine M, die eine Motoreinheit 2, ein Ausführungsbeispiel einer erfindungsgemäßen Verbindungsvorrichtung 1 und ein Gehäuse 3 umfasst. Die Verbindungsvorrichtung 1 ist zwischen der Motoreinheit 2 und dem Gehäuse 3 angeordnet und verbindet die Motoreinheit 2 spielfrei mit dem Gehäuse 3 zu der Maschine M.

In dem dargestellten Ausführungsbeispiel weist die Motoreinheit 2 eine Welle 2a auf, die an einem Ende durch eine Lagereinheit 2b gelagert ist, wobei die Lagereinheit 2b in dem dargestellten Ausführungsbeispiel aus einem Kugellager und einer zu einem Gehäuse der Motoreinheit 2 gehörenden Lagerstutze besteht.

Das Gehäuse 3 weist eine Aussparung 3a auf, in die die Verbindungsvorrichtung 1 und die Motoreinheit 2 eingesetzt sind.

Die erfindungsgemäße Verbindungsvorrichtung 1 umfasst eine Innenwand 1a, die an der Motoreinheit 2, insbesondere an der Lagereinheit 2b, anliegt, eine Außenwand 1b, die an dem Gehäuse 3 bzw. an der Aussparung 3a des Gehäuses 3 anliegt, und mindestens eine Kammer 1c, die zusammen mit der Innenwand 1a und der Außenwand 1b einen Profilkörper 1d bildet, wobei die Innenwand 1a und die Außenwand 1b vor Anlegen an die Motoreinheit 2 bzw. dem Gehäuse 3 nicht steif sind. Weiterhin umfasst die Verbindungsvorrichtung 1 ein selbstaushärtendes Füllmaterial 1e, das in flüssigem Zustand in die Kammer 1c des Profilkörpers 1d füllbar ist. Das Füllmaterial 1e ist in dem in Verbindungsposition montiertem Profilkörper 1d ausgehärtet, so dass der Profilkörper 1d versteift ist. Hierdurch verbindet der versteifte Profilkörper 1d spielfrei die Motoreinheit 2 mit dem Gehäuse 3, wodurch die Motoreinheit 2, die Verbindungsvorrichtung 1 und das Gehäuse 3 spielfrei und genau zu der Maschine M zusammengebaut sind.

Insbesondere sind die Motoreinheit 2 und/oder das Gehäuse 3 von dem Profilkörper 1d bei ausgehärtetem Füllmaterial voneinander lösbar.

Das heißt, die Motoreinheit 2 ist durch eine Klemmkraft der versteiften Verbindungsvorrichtung 1 mit dem Gehäuse 3 verbunden, so dass die Motoreinheit 2 werkzeuglos wieder von dem Gehäuse 3 getrennt werden kann. Hierbei ist lediglich die Klemmkraft zu überwinden, um beispielsweise bei einer Wartung oder einem Austausch der Motoreinheit 2 an diese zu gelangen. Ferner wird hierdurch gegenüber dem bekannten Verkleben der Motoreinheit 2 an das Gehäuse 3 vermieden, dass Klebstoff möglicherweise an die beweglichen Teile der Motoreinheit 2 gelangen kann, wodurch sich eine Fehlfunktion der zusammengebauten Maschine M ergibt.

Beim Zusammenbauen der Maschine M wird die Verbindungsvorrichtung 1 in einem Schritt a) spielfrei an das Gehäuse 3, insbesondere in die Aussparung 3a des Gehäuses 3 angelegt. Da der Profilkörper 1d vorzugsweise aus elastischem Material, insbesondere Kunststoff besteht, ist er flexibel. Der Profilkörper 1d sitzt damit spielfrei in der Aussparung 3a des Gehäuses 3, wodurch die Herstellungstoleranzen des Gehäuses 3 durch den Profilkörper 1d ausgeglichen sind.

In einem Schritt b) wird das flüssige und selbstaushärtende Füllmaterial 1e in die zumindest eine Kammer 1c der Verbindungsvorrichtung 1 eingefüllt.

Anschließend wird in einem Schritt c) die Motoreinheit 2 an die Verbindungsvorrichtung 1 spielfrei angelegt, so dass die Innenwand 1a der Verbindungsvorrichtung 1 an der Motoreinheit 2 anliegt. Der noch flexible Profilkörper 1d sitzt spielfrei an der Motoreinheit 2, so dass der Profilkörper 1d auch die Herstellungstoleranzen der Motoreinheit 2 ausgleicht.

In einem Schritt d) härtet das Füllmaterial 1e in dem Profilkörper 1d aus, so dass die Verbindungsvorrichtung 1 versteift und dadurch die Motoreinheit 2 mit dem Gehäuse 3 spielfrei zueinander festlegt.

Vorteilhafterweise können die Schritte a) bis c) in einer umgekehrten Reihenfolge ausgeführt werden, wenn beispielsweise dadurch der Zusammenbauprozess effizienter ausgeführt werden kann oder der Aufbau der Maschine M es erfordert.

Vorteilhafterweise wird durch Wärmezufuhr zu dem Füllmaterial 1e das Aushärten des Füllmaterials 1e und damit die Versteifung der Verbindungsvorrichtung 1 kontrolliert durchgeführt. Eine unnötige Verspannung der Teile zueinander kann dadurch vermieden werden, die die genaue Montage der Motoreinheit 2 zu dem Gehäuse 3 verschlechtern könnte.

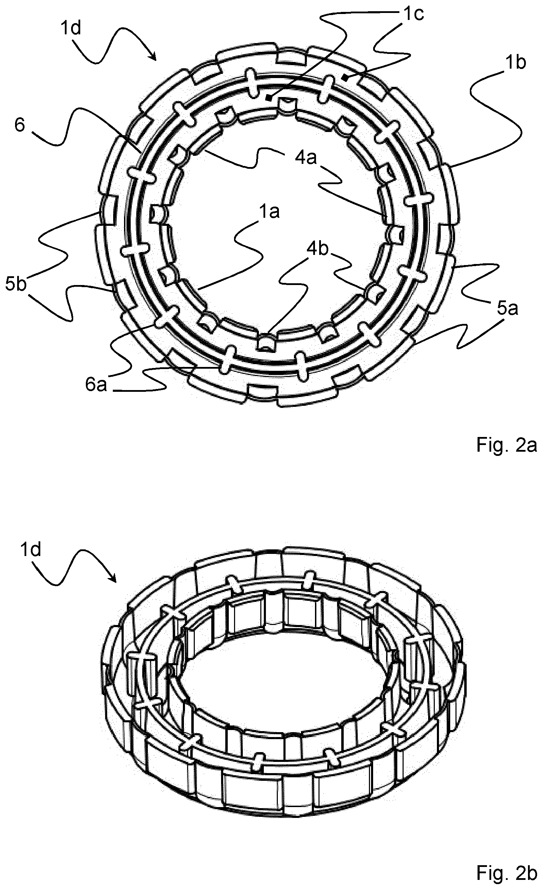

In der Figur 2a ist eine Draufsicht eines bevorzugten Ausführungsbeispiels des Profilkörpers 1d dargestellt, bei dem die Innenwand 1a und die Außenwand 1b des Profilkörpers 1d alternierende Wandabschnitte 4a, 4b und 5a, 5b mit unterschiedlichen Wandstärken aufweisen. Bei Bedarf können die alternierenden Wandabschnitte 4a, 4b und 5a, 5b auch nur an der Innenwand 1a oder an der Außenwand 1b des Profilkörpers 1d vorgesehen sein.

Die dickwandigen Wandabschnitte 4a der Innenwand 1a dienen zum Verstärken des Profilkörpers 1d der Verbindungsvorrichtung 1 und zum Verklemmen der Verbindungsvorrichtung 1 mit der Motoreinheit 2. Die dünnwandigen Wandabschnitte 4b der Innenwand 1a ermöglichen die Flexibilität der Innenwand 1a, so dass die Innenwand 1a mögliche Herstellungstoleranzen der Lagereinheit 2b bzw. der Motoreinheit 2 ausgleichen kann. Die dickwandigen Wandabschnitte 5a der Außenwand 1b dienen ebenfalls zum Verstärken des Profilskörpers 1d der Verbindungsvorrichtung 1 und zum Verklemmen der Verbindungsvorrichtung 1 mit dem Gehäuse 3. Die dünnwandigen Wandabschnitte 5b der Außenwand 1b ermöglichen die Flexibilität der Außenwand 1b, so dass die Außenwand 1b mögliche Herstellungstoleranzen der Aussparung 3a bzw. des Gehäuses 3 ausgleichen kann.

Vorzugsweise sind die dickwandigen und dünnwandigen Wandabschnitte 4a, 4b und 5a, 5b abwechselnd entlang eines Umfangs der Innen- und Außenwand 1a und 1b angeordnet.

Zwischen der Innenwand 1a und der Außenwand 1b sind zwei Kammern 1c vorgesehen, die durch eine Trennwand 6 voneinander getrennt sind. Die Trennwand 6 weist eine Mehrzahl von Verstärkungsrippen 6a auf, die die Trennwand 6 und vor allem den Profilkörper 1d verstärken. Die Trennwand 6 dient dazu, die Verbindungsvorrichtung 1 zu verstärken, wenn eine Baugröße der Verbindungsvorrichtung 1 solch eine Verstärkung erfordert. Zusätzlich kann die Trennwand 6 einen Bedarf an Füllmaterial 1e reduzieren, so dass die Aushärtung des Füllmaterials 1e und damit die Versteifung des Profilkörpers 1d schneller erreicht werden können.

Die Figur 2b zeigt eine schematische perspektivische Darstellung des Profilskörpers 1d der Figur 2a, aus der ein kreisförmiges U-Profil des Profilkörpers 1d zu erkennen ist. Der Profilkörper 1d kann jedoch auch ein kreisförmiges H-, Waben- oder Lamellenprofil aufweisen. Weiterhin kann der Profilkörper 1d auch ein rechteckförmiges Profil aufweisen.

Wie bereits erwähnt, ist das Füllmaterial 1e ein selbstaushärtender Baustoff, der insbesondere Klebstoff oder Schaumstoff umfassen kann. Falls die Verbindungsvorrichtung 1 auch im Betrieb der Maschine M entstehende Vibrationen kompensieren oder zumindest minimieren soll, kann das Füllmaterial 1e auch eine höhere Eigenmasse nach dem Aushärten aufweisen, wie beispielsweise Beton. Nach dem Aushärten kann die Verbindungsvorrichtung 1 eine Übertragung der Vibrationen der Motoreinheit 2 auf das Gehäuse 3 aufgrund ihrer Trägheit unterbinden.

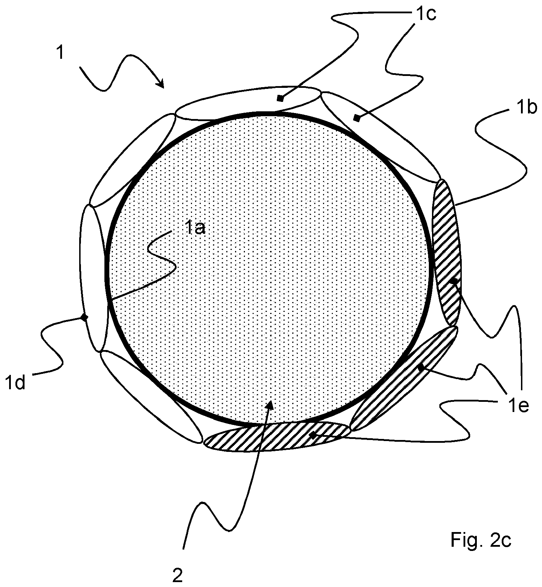

In der Figur 2c ist eine schematische Draufsicht eines Ausführungsbeispiels der Verbindungsvorrichtung 1 dargestellt, bei der der Profilkörper 1d aus aneinander gesetzten Lamellen besteht, die ein ringförmiges geschlossenes Lamellenprofil bilden. Die Lamellen weisen jeweils eine Kammer 1c auf, in die das Füllmaterial 1e füllbar ist. Hierdurch ist vorteilhafterweise eine sehr kompakte Verbindungsvorrichtung 1 bzw. ein sehr kompakter Profilkörper 1d herstellbar. Die einzelnen Lamellen sind flexibel ausgebildet und werden durch das Füllmaterial 1e nach dessen Aushärten versteift.

Die Motoreinheit 2 ist schematisch als ein schraffierter Kreis im Innern der Verbindungsvorrichtung 1 dargestellt, so dass die Innenwand 1a des Profilskörpers 1d bzw. der jeweiligen Lamellen an der Motoreinheit anliegt. Das Gehäuse 3 ist in der Figur 2c nicht dargestellt, würde aber im montierten Zustand an der Außenwand 1b des Profilkörpers 1d anliegen und damit den Profilkörper 1d und die Motoreinheit 2 umschließen.

Weiterhin sind die Lamellen bei dem Ausführungsbeispiel an ihren Enden miteinander verbunden, so dass jeweils in sich geschlossene Lamellen vorliegen. Die Lamellen können jedoch an ihren jeweiligen Enden auch offen sein, so dass ein kontinuierlicher Übergang zwischen den einzelnen Lamellen vorhanden ist, wodurch das eingefüllte Füllmaterial 1e zwischen den einzelnen Kammern 1c fließen kann und ein ausgeglichenes Ausfüllen der Kammern 1c des Profilkörpers 1d ermöglicht ist.

## Patentansprüche

1. Verbindungsvorrichtung (1) zum Verbinden einer Motoreinheit (2) mit einem Gehäuse (3), wobei die Verbindungsvorrichtung (1) dazu vorgesehen ist, zwischen der Motoreinheit (2) und dem Gehäuse (3) angeordnet zu sein, mit
einer Innenwand (1a), die an der Motoreinheit (2) anliegt,
einer Außenwand (1b), die an dem Gehäuse (3) anliegt,
**gekennzeichnet durch** mindestens eine Kammer (1c), die zusammen mit der Innenwand (1a) und der Außenwand (1b) einen Profilkörper (1d) bildet,
wobei die Innenwand (1a) und die Außenwand (1b) vor Anlegen an die Motoreinheit (2) bzw. dem Gehäuse (3) nicht steif sind, und
ein selbstaushärtendes Füllmaterial (1e), das in flüssigem Zustand in die Kammer (1c) des Profilkörpers (1d) füllbar ist, wobei das Füllmaterial (1e) in dem in Verbindungsposition zwischen der Motoreinheit und dem Gehäuse montierten Profilkörper (1d) ausgehärtet ist, so dass der Profilkörper (1d) versteift ist und eine Klemmkraft erzeugbar ist, um die Motoreinheit (2) mit dem Gehäuse (3) spielfrei zu verbinden.

2. Verbindungsvorrichtung (1) nach Anspruch 1, **dadurch gekennzeichnet, dass** die Motoreinheit (2) und/oder das Gehäuse (3) von dem Profilkörper (1d) bei ausgehärtetem Füllmaterial (1e) voneinander lösbar sind.

3. Verbindungsvorrichtung (1) nach Anspruch 1 oder 2, **dadurch gekennzeichnet, dass** der Profilkörper (1d) an einer Lagereinheit (2b) der Motoreinheit (2) und in einer Aussparung (3a) des Gehäuses (3) angeordnet ist.

4. Verbindungsvorrichtung (1) nach einem der vorhergehenden Ansprüche 1 bis 3, **dadurch gekennzeichnet, dass** der Profilkörper (1d) ein ring- oder rechteckförmiges U-, H-, Waben- oder Lamellenprofil aufweist.

5. Verbindungsvorrichtung (1) nach einem der vorhergehenden Ansprüche 1 bis 4, **dadurch gekennzeichnet, dass** der Profilkörper (1d) aus einem elastischen Material, insbesondere Kunststoff, besteht.

6. Verbindungsvorrichtung (1) nach einem der vorhergehenden Ansprüche 1 bis 5, **dadurch gekennzeichnet, dass** die Innen- und/oder Außenwand (1a, 1b) alternierende Wandabschnitte (4a, 4b; 5a, 5b) mit unterschiedlichen Wandstärken aufweisen.

7. Verbindungsvorrichtung (1) nach Anspruch 6, **dadurch gekennzeichnet, dass** dünnwandige und dickwandige Wandabschnitte (4b, 5b und 4a, 5a) abwechselnd entlang eines Umfangs der Innen- und/oder Außenwand (1a, 1b) angeordnet sind.

8. Verbindungsvorrichtung (1) nach einem der vorhergehenden Ansprüche 1 bis 7, **dadurch gekennzeichnet, dass** das Füllmaterial (1e) ein Klebstoff oder ein Schaumstoff ist.

9. Verfahren zum Verbinden einer Motoreinheit (2) mit einem Gehäuse (3) mittels einer Verbindungsvorrichtung (1) nach einem der Ansprüche 1 bis 8, **gekennzeichnet durch** die Schritte:
a) Spielfreies Anlegen der Verbindungsvorrichtung (1) an das Gehäuse (3),
b) Befüllen zumindest einer Kammer (1c) der Verbindungsvorrichtung (1) mit einem flüssigen Füllmaterial (1e),
c) Spielfreies Anlegen der Motoreinheit (2) an die Verbindungsvorrichtung (1), und
d) Aushärten des Füllmaterials (1e), so dass die Verbindungsvorrichtung (1) versteift, eine Klemmkraft erzeugt wird, und dadurch die Motoreinheit (2) mit dem Gehäuse (3) spielfrei zueinander festlegt.

10. Verfahren nach Anspruch 9, **dadurch gekennzeichnet, dass** die Schritte a) bis c) in einer umgekehrten Reihenfolge ausgeführt werden.

11. Verfahren nach Anspruch 9 oder 10, **dadurch gekennzeichnet, dass** das Aushärten des Füllmaterials (1e) mittels Wärmezufuhr kontrolliert durchgeführt wird.

## Claims

1. Connecting device (1) for connecting a motor unit (2) to a housing (3), wherein the connecting device (1) is intended to be arranged between the motor unit (2) and the housing (3), having
an inner wall (1a) which abuts against the motor unit (2),
an outer wall (1b) which abuts against the housing (3),
**characterised by** at least one chamber (1c) which, together with the inner wall (1a) and the outer wall (1b), forms a profiled body (1d),
wherein the inner wall (1a) and the outer wall (1b) are not rigid before being applied to the motor unit (2) and the housing (3), respectively, and
a self-hardening filling material (1e) which can be filled in a liquid state into the chamber (1c) of the profiled body (1d), the filling material (1e) being hardened in the profiled body (1d) mounted in the connecting position between the motor unit and the housing, so that the profiled body (1d) is stiffened and a clamping force can be generated in order to connect the motor unit (2) to the housing (3) without backlash.

2. Connecting device (1) according to claim 1, **characterised in that** the motor unit (2) and/or the housing (3) are detachable from the profile body (1d) when the filling material (1e) has hardened.

3. Connecting device (1) according to claim 1 or 2, **characterised in that** the profile body (1d) is arranged on a bearing unit (2b) of the motor unit (2) and in a recess (3a) of the housing (3).

4. Connecting device (1) according to any of the preceding claims 1 to 3, **characterised in that** the profile body (1d) has an annular or rectangular U-, H-, honeycomb- or lamellar profile.

5. Connecting device (1) according to one of the preceding claims 1 to 4, **characterised in that** the profile body (1d) consists of an elastic material, in particular plastic.

6. Connecting device (1) according to any one of the preceding claims 1 to 5, **characterized in that** the inner and/or outer wall (1a, 1b) have alternating wall portions (4a, 4b; 5a, 5b) with different wall thicknesses.

7. Connecting device (1) according to claim 6, **characterized in that** thin-walled and thick-walled wall portions (4b, 5b and 4a, 5a) are alternately arranged along a periphery of the inner and/or outer wall (1a, 1b).

8. Connecting device (1) according to any one of the preceding claims 1 to 7, **characterized in that** the filler material (1e) is an adhesive or a foam.

9. Method of connecting a motor unit (2) to a housing (3) by means of a connecting device (1) according to any one of claims 1 to 8, **characterized by the** steps:
a) backlash-free application of the connecting device (1) to the housing (3),
b) filling at least one chamber (1c) of the connecting device (1) with a liquid filling material (1e),
c) backlash-free application of the motor unit (2) to the connecting device (1), and
d) hardening of the filling material (1e), so that the connecting device (1) is stiffened, a clamping force is generated, and thereby the motor unit (2) is fixed to the housing (3) without backlash relative to each other.

10. The method according to claim 9, **characterised in that** steps a) to c) are carried out in a reverse order.

11. Method according to claim 9 or 10, **characterised in that** the curing of the filling material (1e) is carried out in a controlled manner by means of heat supply.

## Revendications

1. Dispositif de connexion (1) pour connecter une unité de moteur (2) à un boîtier (3), le dispositif de connexion (1) étant prévu pour être disposé entre l'unité de moteur (2) et le boîtier (3), avec
une paroi intérieure (1a) qui est ajusteé à l'unité de moteur (2),
une paroi extérieure (1b) qui est ajusteé au boîtier (3),
**caractérisé par** au moins une chambre (1c) qui, avec la paroi intérieure (1a) et la paroi extérieure (1b), forme un corps profilé (1d),
dans lequel la paroi intérieure (1a) et la paroi extérieure (1b) ne sont pas rigides avant d'être ajusteés respectivement contre l'unité de moteur (2) et le boîtier (3), et
un matériau de remplissage autodurcissant (1e) qui peut être rempli à l'état liquide dans la chambre (1c) du corps profilé (1d), le matériau de remplissage (1e) étant durci dans le corps profilé (1d) monté en position de liaison entre l'unité de moteur et le boîtier, de sorte que le corps profilé (1d) est rigidifié et qu'une force de serrage peut être générée pour relier sans jeu l'unité de moteur (2) au boîtier (3).

2. Dispositif de connexion (1) selon la revendication 1, **caractérisé en ce que** l'unité de moteur (2) et/ou le boîtier (3) peuvent être détachés l'un de l'autre du corps profilé (1d) lorsque le matériau de remplissage (1e) a durci.

3. Dispositif de connexion (1) selon la revendication 1 ou 2, **caractérisé en ce que** le corps profilé (1d) est disposé sur une unité de palier (2b) de l'unité de moteur (2) et dans un évidement (3a) du boîtier (3).

4. Dispositif de connexion (1) selon l'une des revendications précédentes 1 à 3, **caractérisé en ce que** le corps profilé (1d) comporte un profil annulaire ou rectangulaire en U, en H, en nid d'abeille ou en lamelles.

5. Dispositif de connexion (1) selon l'une des revendications précédentes 1 à 4, **caractérisé en ce que** le corps profilé (1d) est réalisé en un matériau élastique, notamment en matière plastique.

6. Dispositif de connexion (1) selon l'une des revendications précédentes 1 à 5, **caractérisé en ce que** la paroi intérieure et/ou extérieure (1a, 1b) comporte des portions de paroi alternées (4a, 4b; 5a, 5b) ayant des épaisseurs de paroi différentes.

7. Dispositif de connexion (1) selon la revendication 6, **caractérisé en ce que** des sections de paroi à paroi mince et à paroi épaisse (4b, 5b et 4a, 5a) sont disposées en alternance le long d'une circonférence de la paroi interne et/ou externe (1a, 1b).

8. Dispositif de connexion (1) selon l'une des revendications précédentes 1 à 7, **caractérisé en ce que** le matériau de remplissage (1e) est un adhésif ou une mousse.

9. Procédé de connexion d'une unité de moteur (2) à un boîtier (3) au moyen d'un dispositif de connexion (1) selon l'une des revendications 1 à 8, **caractérisé par** les étapes:
a) ajustage sans jeu du dispositif de connexion (1) sur le boîtier (3),
b) remplissage d'au moins une chambre (1c) du dispositif de connexion (1) avec un matériau de remplissage liquide (1e),
c) ajustage sans jeu de l'unité de moteur (2) sur le dispositif de connexion (1), et
d) durcissement du matériau de remplissage (1e), de sorte que le dispositif de connexion (1) soit rigidifié, qu'une force de serrage soit générée et que l'unité de moteur (2) soit fixée sans jeu l'une par rapport à l'autre avec le boîtier (3).

10. Procédé selon la revendication 9, **caractérisé en ce que** les étapes a) à c) sont réalisées dans un ordre inversé.

11. Procédé selon la revendication 9 ou 10, **caractérisé en ce que** le durcissement du matériau de remplissage (1e) est effectué de manière contrôlée au moyen d'un apport de chaleur.
